# EUROPEAN PATENT SPECIFICATION

(11) **EP 2 706 539 B1**
(45) Date of publication and mention of the grant of the patent: **02.01.2019**
(21) Application number: 13183135.6
(22) Date of filing: 05.09.2013
(51) Int. Cl.: H01B 7/14, H01B 13/06, H01B 7/282

(54) **Subsea cables**
Unterwasserkabel
Câbles sous-marins

(30) Priority: 05.09.2012 GB 201215888
(43) Date of publication of application: 12.03.2014
(73) Proprietor: BPP Cables Ltd, London EC2V 5DE (GB)
(72) Inventor: PATEL, Darren Lindsay, Billericay, Essex CM12 0EH (GB)
(74) Representative: Turner, Craig Robert

(56) References cited:
- WO-A1-01/52273
- GB-A- 1 247 715
- GB-A- 1 534 796
- US-A- 3 339 007
- US-A- 5 043 538
- US-A1- 2011 048 765

## Description

The present invention relates to a cable for conducting electricity which is particularly useful for subsea applications. The invention also relates to a water-blocking layer to protect components of such cables from water.

### BACKGROUND

Installations in the sea, such as offshore oil platforms and wind turbines are now commonplace, and power cables are often used to transmit electricity to and from such sea-based installations to those on the land.

There is growing industrial demand for power cables to operate underwater at increasing voltage and current levels. The demand is fuelled by the need for oil and gas production from fields located on the deep ocean sea bed, and by the expanding utilization of wind, tidal and ocean wave renewable energy sources.

These power cables have applications in both very deep waters and shallow coastal waters. They may be used in applications such as the transfer of power to or from an offshore oil and/or gas platform, or the utilization of stranded gas for power generation and its transmission by subsea power networks to the customer or transmission network onshore. Power cables may also be used to supply electricity to heat pipelines (especially in ultra-deep-water fields), and other underwater devices such as multiphase pumps, compressors and other subsea processing technology, such as electric trees and control systems.

The offshore oil and gas sector has an ever-increasing requirement for distribution of higher power, under environmental conditions of greater severity and in deeper water. Higher installation and maintenance costs which arise from the challenging environments have led the industry to favour cables with longer operational lifetimes, and which require less maintenance. Power-hungry underwater machinery has also led to the requirement for larger cables capable of carrying higher currents and voltages. Increasing depth of waters and more dynamic conditions have pushed the ability of conventional cable designs to their limits. This has led to the need for improved cable designs and materials to meet these changing needs of the offshore industry.

Currently the industry has two main requirements for such underwater power cables. The first is that the cable are able to operate at high power levels, for example, with capacities up to around 132KV and 525A, operating at power levels of up to 100MW. The second is that the cables are able to withstand dynamic flexing for long periods of time, with a fatigue life of up to 30 years. Since subsea cables are typically subject to constant motion generated by waves, tides and currents in the ocean, the ability of a subsea cable to withstand fatigue is important.

Another particularly important requirement of subsea cables is its waterproof nature. High voltage insulated subsea cables typically employ a metallic water-blocking layer which surrounds and protects the extruded core of the cable. These layers also exclude water and provide a fault current return path. The water- or moisture-excluding properties of this sheath is a crucial element of its functionality. The layer needs to be mechanically robust, prevent water ingress into the insulation layers of the cable, and be able to withstand the static and dynamic fatigue loads to which the cable will be subjected during operation.

Conventionally, copper, lead or lead alloys have been used for these water-blocking layers. However, these conventional materials do not typically have good resistance to fatigue, and often exhibit cracks when used in heavier cables, or when deployed in dynamic applications.

A comparison of the most important properties of copper, lead and lead alloys are presented in Table 1.

**Table 1**

| | Copper - ETP | **Lead** | **Lead Alloy E** | **Lead Alloy B** |
|---|---|---|---|---|
| Young's Modulus (GPa) | 117 | - | - | - |
| Yield Strength (MPa) | 230 | - | - | - |
| UTS (MPa) | 290 | 13 | 18.6 | 25.2 |
| Fatigue Strength (MPa) | 95 @ 10⁸ cycles | 3.2 @ 10⁷ cycles | 6.3 @ 10⁷ cycles | 9.6 @ 10⁷ cycles |
| Thermal Conductivity at 20°C (W/mK) | 391 | 35.3 | 33 | 33 |
| Electrical resistivity at 20°C (Ohm.m) | 1.7E-08 | 2.1E-07 | 2.2E-07 | 2.2E-07 |

Copper-ETP ("Electrolytic Tough Pitch"; 99.9% Cu minimum; UNS, or unified numbering system, C11000) is one of the most widely used grades of copper in the cable industry, due to a good combination of thermal conductivity, corrosion resistance and good workability.

Due to the favourable electrical properties of copper, water-blocking layers consisting of copper are often used to provide electrical screening and carry short-circuit currents. Copper performs better in response to fatigue stresses when compared to lead, and is thus recommended for dynamic applications where repeated bends are expected (Thomas Worzyk, Submarine Power Cables, Design, Installation, Repair, Environmental Aspects, 2009).

However, water-blocking layers made of copper are susceptible to failure during long term use in dynamic applications.

Lead has reliably served the cable industry over the last century and is the traditional choice for use in water-blocking layers in submarine cables, due to its mechanical robustness and corrosion resistance to sea water. British practice typically involves the use of unalloyed lead, lead alloy E (0.4% tin, 0.2% antimony) and lead alloy B (0.85% antimony), which have fatigue endurance limits (10⁷ cycles) of 3.2, 6.3 and 9.6 MN/m², respectively. A lead water blocking layer is typically completely impermeable to water ingression and humidity diffusion (Thomas Worzyk, Submarine Power Cables, Design, Installation, Repair, Environmental Aspects, 2009). The use of lead alloys also improves the creep characteristics of the layer.

Use of lead and lead alloys, however, is not particularly desirable for dynamic cable applications, due to the high density (and thus heavy weight) of lead. Further, lead and its alloys lends to highly rigid structures which, in turn, result in poor fatigue performance. Lead sheaths are therefore more suited for static cable applications. Lead is also highly toxic, and thus any leachate containing lead or lead compounds is detrimental to the surrounding environment.

In general, the mechanical, thermal and electrical properties of unalloyed lead are much worse than those of copper-ETP, with a tensile strength and fatigue strength of about 5% of those of copper-ETP, and thermal and electrical conductivities of about 10%. Lead alloys provide increased tensile and fatigue resistance, with similar levels of thermal and electrical conductivities.

US3339007 relates to power cables with a moisture barrier made of steel, aluminium or brass.GB1247715 relates to a metallic sheath (primarily intended as a moisture barrier) enclosing the core of a cable which is formed with its overlapping edges bonded together by a non-metallic adherent material to form a seam. The exposed outer surface of the sheath being free of the adherent material (e.g. a copolymer of ethylene acrylic acid).

Thus there is a need for improved subsea cables which resolve the deficiencies of conventional cables and meet current industry performance requirement for subsea cables.

### Summary of the invention

The present invention solves the problems of the prior art by providing an improved water-blocking layer that surrounds the core of a subsea cable. More particularly, the present invention provides an improved water-blocking layer that has a high tensile strength, and exhibits high levels of resistance to fatigue from bending and flexure.

The present invention provides a cable as defined in claim 1. The present invention also provides a use of an alloy as defined in claim 10. The present invention also provides a method of manufacturing a cable as defined in claim 12. The present invention also provides a method of transmitting electricity as defined in claim 15. Further features are defined in the dependent claims.

### Detailed description

One feature of the present invention is a novel water blocking layer encompassing an insulated conductor that is capable of withstanding dynamic flexure, bending moments and corrosive environments to which subsea cables are typically subjected under long term dynamic loading during operation, whilst maintaining the integrity of the layer to ensure water is not allowed to permeate through it.

The copper alloy for use in the water blocking layer of the present invention is selected from alloys according claim 1. These alloys exhibit desirable properties such as corrosion resistance, fatigue strength, tensile strength, electrical conductivity, thermal conductivity and workability, such that they are particularly suited for use in a water-blocking layer for subsea cables.

Table 2 provides a summary of the mechanical and physiochemical properties of copper alloys. Also included are each material's susceptibility to stress corrosion cracking (SCC), susceptibility the Dissolved Oxide/Hydrogen Permeation Interaction (O/H), and key features, all relative to copper-ETP. An explanation of SCC and O/H are provided in example 1.

**Table 2**

| Material | | Copper-ETP (conventional material) | Copper-HCP | Copper Beryllium alloys | Brass alloys | Aluminium Brass alloys | Copper Nickel alloys |
|---|---|---|---|---|---|---|---|
| Major Components | | 99.9%Cu (min) | 99.95%Cu (min) | CuBe | CuZn | CuZnAl | Cu-Ni (Sn)(Zn) |
| UNS (unified numbering system) | | C11000 | C10300 | C17xxx i.e. C17000 | C2xxxx, C3xxxx C4xxxx i.e. C26000 | C6xxxx i.e. C68800 | C7xxxx i.e. C70600 |
| Key Features, relative to Copper-ETP | | N/A | Lower susceptibility to O/H | Much higher strength | Moderately higher strength | Higher strength | Greater corrosion resistance, higher strength |
| Susceptibility to SCC, relative to Copper-ETP | | N/A | Same | Lower | Same | Lower | Lower |
| Susceptibility to O/H, relative to Copper-ETP | | N/A | Lower | Not susceptible | Not susceptible | Not susceptible | Not susceptible |
| Fatigue Strength (10⁸) | MPa | 90-100^ | 90-100* | 220-340* | 120-180* | 220-230* | 220-230*(C70250) |
| Thermal Conductivity (20°) | W/m K | 391^{∼} | 386^{∼} | 118^ | 120^ | 69^ | 40^ |
| Young's Modulus | GPa | 117^{∼} | 117^{∼} | 115^ | 110^ | 116^ | 120-150* |
| Yield | MPa | 140-320+^{∼} | 140-320+^{∼} | 550-760^ | 160-430+^{∼} | 705^ | 330-520^ |
| UTS | MPa | 220-360+^{∼} | 220-360+^{∼} | 690-825^ | 270-480+^{∼} | 780^ | 415-540^ |

| | | | | | | | |
|---|---|---|---|---|---|---|---|
| *Sources:* *'Copper and Copper Alloys', J.R. Davis, ASM International, Handbook p.440-528 ^*MatWeb. com* ^{∼}*Aurubis Material datasheets* | | | | | | | |

It is noted that any percentage amount of a metal component in an alloy described herein is provided as a fraction of the weight of the metal per total weight of the alloy as a percentage, or % (w/w). It will be appreciated by the skilled person that, where a range of a percentage amount of a metal in an alloy is given, the amount of metal in that alloy may vary within that range, provided the total amount of all metals in that alloy adds up to a total of 100% (w/w). It will also be appreciated that some metals and alloys may inevitably have very small quantities of impurities within them. Such impurities may include lead, manganese, iron, zinc, and other metals. These impurities may be present since they are typically either too difficult or costly to remove when the metal or alloy is being produced. These impurities may be present in the range from 0.0001%, 0.001%, 0.005% or 0.01% to 0.1%, 0.5%, 1%, 2% or 4% (w/w). It will be appreciated such impurities may be present in the metals and alloys of the present invention without affecting or departing from the scope of the invention.

According to the present invention, there is provided a cable comprising one or more cores, each core comprising: a conductor; an insulating layer; and a water-blocking layer, wherein the conductor, the insulating layer and the water-blocking layer each extend along the longitudinal axis of the core, where the insulating layer is axially external to the conductor, and the water-blocking layer is axially external to the insulating layer, and wherein the water-blocking layer comprises a copper alloy according claim 1. In an alternative embodiment, the water-blocking layer may consist of the copper alloy.

The present invention also provides a use of a copper alloy in a water-blocking layer of a cable wherein the alloy comprises copper and nickel; copper and beryllium; or copper, zinc and aluminium.

In an embodiment, the alloy comprises copper and nickel.

Copper-nickel alloys possess fatigue and tensile strengths that are significantly greater than that of copper. Copper-nickel alloys also exhibit excellent corrosion resistance, and are particularly resistant to stress corrosion cracking, as well as having good fatigue and tensile strengths. Electrical and thermal properties of Cu-Ni are sufficient.

The alloy may comprise from 6% to 20% (w/w) nickel, and 80% to 94% (w/w) copper. Alternatively, the alloy comprising copper and nickel may comprise from 7% to 15% (w/w) nickel, and 85% to 93% (w/w) copper. Alternatively, the alloy may comprises from 8% to 12% (w/w) nickel, and 88% to 92% (w/w) copper. Alternatively the alloy may comprises 9 to 11% (w/w) nickel, and 89% to 91% (w/w) copper. Alternatively the alloy may comprises from 8% to 12% (w/w) nickel, 0.5% to 2.5% (w/w) iron, 0.5% to 1.5% (w/w) manganese, and 84% to 91% (w/w) copper.

In an embodiment, the alloy consists of copper and nickel and optionally up to 4% (w/w) additives or impurities. The alloy may consist of from 6% to 20% (w/w) nickel, and the remainder of the alloy consisting of copper, and optionally up to 4% (w/w) additives or impurities. Alternatively, the alloy may consist of from 7% to 15% (w/w) nickel, and the remainder of the alloy consisting of copper, and optionally up to 4% (w/w) additives or impurities. Alternatively, the alloy may consist of from 8% to 12% (w/w) nickel, and the remainder of the alloy consisting of copper, and optionally up to 4% (w/w) additives or impurities. Alternatively, the alloy may consist of from 9% to 11% (w/w) nickel, and the remainder of the alloy consisting of copper, and optionally up to 4% (w/w) additives or impurities. Alternatively the alloy may consist of from 8% to 12% (w/w) nickel, 0.5% to 2.5% (w/w) iron, 0.5% to 1.5% (w/w) manganese, and the remainder of the alloy consisting of copper, and optionally up to 4% (w/w) additives or impurities.

In the most preferred embodiment, the alloy is copper nickel alloy UNS C70600. Copper nickel alloy C70600 is particularly suited for use in a water-blocking layer for use in a high voltage, dynamic subsea power cable. More particularly, C70600 has superior tensile strength and fatigue strength over copper-ETP, and is highly resistant to stress corrosion cracking and other types of corrosion that could compromise the integrity and life-time of a water-blocking layer. The alloy also exhibits ease of welding (meaning it is easier to handle and use during manufacture).

In an embodiment, the alloy may comprise 20% to 40% (w/w) nickel, and 60% to 80% (w/w) copper. Alternatively, the alloy may comprise 25% to 35% (w/w) nickel, and 65% to 75% (w/w) copper. Alternatively, the alloy may comprises 25% to 35% (w/w) nickel, 0.1% to 2% (w/w) iron, 0.5% to 1.5% (w/w) manganese, and 61.5% to 74.4% (w/w) copper. Alternatively the alloy may comprises 29% to 33% (w/w) nickel, 0.4% to 1% (w/w) iron, 0.8% to 1.2% (w/w) manganese, and 64.8% to 69.8% (w/w) copper.

In an embodiment, the alloy may consist of from 20% to 40% (w/w) nickel, and the remainder of the alloy consisting of copper, and optionally up to 4% (w/w) additives or impurities. Alternatively, the alloy may consist of from 25% to 35% (w/w) nickel, and the remainder of the alloy consisting of copper, and optionally up to 4% (w/w) additives or impurities. Alternatively, the alloy may consist of from 25% to 35% (w/w) nickel, 0.1% to 2% (w/w) iron, 0.5% to 1.5% (w/w) Manganese, and the remainder of the alloy consisting of copper, and optionally up to 4% (w/w) additives or impurities. Alternatively, the alloy may consist of from 29% to 33% (w/w) nickel, 0.4% to 1% (w/w) iron, 0.8% to 1.2% (w/w) Manganese, and the remainder of the alloy consisting of copper, and optionally up to 4% (w/w) additives or impurities.

In a preferred embodiment, the alloy is copper alloy UNS C71500.

In an embodiment, the alloy comprises 25% to 35% (w/w) nickel, 1% to 3% (w/w) iron, 1% to 4% (w/w) manganese, and 58% to 73% (w/w) copper. Alternatively the alloy comprises 29% to 32% (w/w) nickel, 1.7% to 2.3% (w/w) iron, 1.5% to 2.5% (w/w) manganese, and 63.2% to 67.8% (w/w) copper.

In an embodiment, the alloy consists of 25% to 35%(w/w) nickel, 1% to 3% (w/w) iron, 1% to 4% (w/w) Manganese, and the remainder of the alloy consisting of copper, and optionally up to 4% (w/w) additives or impurities. Alternatively, the alloy consists of 29% to 32% (w/w) nickel, 1.7% to 2.3% (w/w) iron, 1.5% to 2.5% (w/w) Manganese, and the remainder of the alloy consisting of copper, and optionally up to 4% (w/w) additives or impurities.

In a preferred embodiment, the alloy is copper alloy UNS C71640.

Copper-nickel alloys, such as C70600, possess excellent mechanical properties, but have lower thermal and electrical conductivities compare to copper. The tensile strength and fatigue strength of C70600 are about 60% and 130% greater than those of the Copper-ETP, but the thermal and electrical conductivities are only about 10% of those of pure copper.

In another embodiment, the alloy comprises copper and beryllium. Copper-beryllium alloys have excellent tensile and fatigue strength characteristics, and an acceptable level of thermal conductivity. However, they are more expensive than other alloys.

The copper-beryllium alloy may comprises 0.5% to 4% (w/w) beryllium and 96% to 99.5% (w/w) copper. Alternatively, the alloy may comprises 1% to 3% (w/w) beryllium and 97% to 99% (w/w) copper. Alternatively, the alloy may comprises 1.5% to 2% (w/w) beryllium and 98% to 98.5% (w/w) copper.

Alternatively, the alloy may consist of copper and beryllium and optionally up to 4% (w/w) additives or impurities. The alloy may consist of 0.5% to 4% (w/w) beryllium and the remainder of the alloy consisting of copper, and optionally up to 4% (w/w) additives or impurities. Alternatively, the alloy may consist of 1% to 3% (w/w) beryllium and the remainder of the alloy consisting of copper, and optionally up to 4% (w/w) additives or impurities. Alternatively, the alloy may consist of 1.5% to 2% (w/w) beryllium and the remainder of the alloy consisting of copper, and optionally up to 4% (w/w) additives or impurities.

In a preferred embodiment, the alloy is copper alloy UNS C17000.

In a further embodiment, the alloy comprises copper, zinc and aluminium. These alloys possess fatigue and tensile strengths which are significantly greater than copper.

The alloy may comprise 20% to 25% (w/w) zinc, 1 to 5% aluminium, and 70% to 79% (w/w) copper. Alternatively, the alloy may consist of 20% to 25% (w/w) zinc, 1 to 5% aluminium, and the remainder of the alloy consisting of copper, and optionally up to 4% (w/w) additives or impurities. In a preferred embodiment, the alloy is copper alloy UNS C68800.

In an embodiment, the surface of the water-blocking layer may be smooth. Alternatively, the surface of the layer may be corrugated with a corrugation pattern. The corrugations may involve a groove extending helically around a longitudinal axis of the water-blocking layer, or a plurality of grooves disposed radially around a longitudinal
axis of the water-blocking layer. Corrugation profiles may influence the water-blocking layer's properties under forces from bending, fatigue and external pressures. Corrugations patterns may alternatively involve a plurality of grooves disposed radially around a longitudinal axis of the water-blocking layer; these corrugation patterns are preferred, as they are believed to provide better protection against longitudinal ingress of water.

The thickness of the water-blocking may vary between 0.3 mm to 5 mm, preferably from 0.5 mm to 3mm, and more preferably 0.8 mm to 2 mm. The most preferred thickness is 1 mm.

The core may further comprise a layer of a sealing material disposed between the water-blocking layer and the insulating layer, wherein the sealing material is capable of swelling upon contact with water. Such sealing material provides additional protection of the conductor and insulator against water. The sealing material may be applied at the screen and between the core and water-blocking layer. Such materials may be in the form of expanding tapes, which swell on contact with moisture and seals the interstices between the individual screen wires or other gaps between the core and the water-blocking layer. The possible consequences of a leak are thus limited to the immediate vicinity of the damaged areas.

In an embodiment, the conductor may comprise metal wire. The cable may have more than one core, for instance, the cable may consists or two, three or more cores. Preferably, the cable has three cores.

When the cable has three cores, the cores may be bundled together along their longitudinal axes to provide an assembly, wherein the at least three cores are bundled together along their longitudinal axes, and wherein at least a part of an external surface of each core is in contact with at least a part of the external surface of each of the other two cores. Such an assembly allows a tight packing of the three cores to provide a cable having a substantially circular cross-section.

The assembly of the three cores may further comprise a spacer extending along the longitudinal axis of the assembly. The spacer provides structural integrity to the assembly, fills any voids or interstices present in the cross section of the assembly, and allows for a substantially more circular cross section. The spacer can be made of any suitable material, such as high density polyethylene (HDPE).

The assembly (and any spacer, if present) may be provided with a sheath. The sheath wraps, or encompasses, the axially external surface of the assembly. The sheath may hold the assembly (and any spacer, if present) together, and provides further structural integrity to the assembly. The sheath can be made of any suitable material, such as polyethylene (PE).

The external surface of the cable may be provided with a first plurality of wires extending along the longitudinal axis of the assembly and placed circumferentially around the assembly (or the sheath, if present). The cable may be further provided with a second plurality of wires extending along the longitudinal axis of the assembly and placed circumferentially around the first plurality of the wires. In a preferred embodiment, the wires of the first plurality of wires are helically wound in a first direction, and the wires of the second plurality of wires are wound in a direction opposition to the first. This arrangement of the two sets of helical wires, with each set helically wound in different directions, advantageously fulfils a number of roles, including providing a fault current path (if necessary), acting as armour (thus protecting the inner assembly of cores from damage), and providing resistance to flexural, torsional and stretching forces.

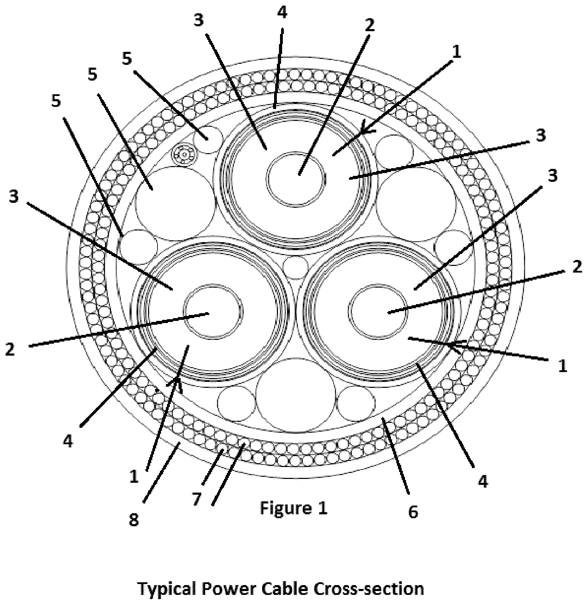

The invention is described further with reference to the Figure 1 of the drawings, which shows a schematic of the cross-section of an embodiment of the cable of the invention.

In an embodiment, a power cable in accordance with present invention comprises three cable cores, 1, bundled within a circular cylinder construction. Each cable core comprises a conductor 2, which may be a wire or a plurality of wires bundled together. The conductor 2 is surrounded or encompassed on its external surface with a layer of a non-conducting insulator. The layer of insulator is further surrounded/encompassed on its external surface with a water blocking layer 4 which provides an impermeable barrier between the external environment of the cable and the insulator and conductor inside the core. The three cores 1 are maintained within a circular boundary by one or more appropriately shaped spacers 5, which may be made of high density polyethylene (HDPE).

The three cores and the one or more spacers are then wrapped a sheath 6, made up of polyethylene (PE) or a similar material. Two layers of contra-helically round wires 7 are then provided on the outer surface of the sheath, which may then be provided with an external sheath 8 which is preferably made of polyethylene.

The present invention also provides a method of manufacturing a cable of the present invention, comprising providing an conductor extending along a longitudinal axis, disposing an insulating layer around the conductor, and disposing a water-blocking layer around the insulating layer to form a core, wherein the insulating layer and water-blocking layer extend along a longitudinal axis of the core, wherein the water-blocking layer comprises a copper alloy, and forming the cable from the core, wherein the alloy comprises copper and nickel; copper and beryllium; or copper, zinc and aluminium.

The water-blocking layer may be formed by wrapping a sheet of the copper alloy radially around the insulating layer. The edges of the wrapped copper alloy sheet may then be bonded together chemically, for instance with an adhesive, or the edges may be welded. This provides a water-tight seam, thereby preventing any water ingress into the core. Welding the edges is preferred, as it is believed to create a stronger seam, and prevents any water or moisture permeating through the seam.

The water-blocking layer and the insulating layer may be fastened or bonded together to prevent movement between the two layers. Alternatively, the water-blocking layer and the insulating layer may not be fastened or bonded together, so as to allow movement between the two layers.

Three such cores may then be bundled together along their longitudinal axes to provide an assembly, wherein at least a part of an external surface of each core is in contact with at least a part of the external surface of each of the other two cores. The assembly may be provided with one or more spacers extending along the longitudinal axis of the assembly, as necessary. The assembly (and spacer, if present) may then be wrapped or encompassed by a sheath. A first plurality of wires may then be provided, the wires extending along the longitudinal axis of the assembly and placed circumferentially around the assembly (or the sheath, if present). A second plurality of wires may then be provided, the second plurality of wires extending along the longitudinal axis of the assembly and placed circumferentially around the first plurality of the wires. The first plurality of wires may be helically wound in a first direction, and the wires of the second plurality of wires are helically wound in a direction opposition to the first.

The present invention also provides a method of transmitting electricity using the cable of the present invention. Specifically, a first installation or device is connected with a second installation or device with the cable, and electricity transmitted from the first installation or device to the second installation or device through the cable. The cable may connect installations, such as wind turbines, offshore oil/gas platforms to onshore power networks to other installations, or to devices such as heaters for pipelines, multiphase pumps, compressors, electric trees and control systems for use in the sea. The power cables themselves may pass through water, such as very deep waters or shallow coastal waters.

The invention may be better understood by reference to the following examples. The invention may be modified with the scope of the appended claims

### Example 1

Copper-ETP (electrolytic tough pitch; 99.9% Cu, minimum; UNS C11000) is one of the most widely used coppers in the cable industry due to a good combination of thermal conductivity, corrosion resistance and good workability.

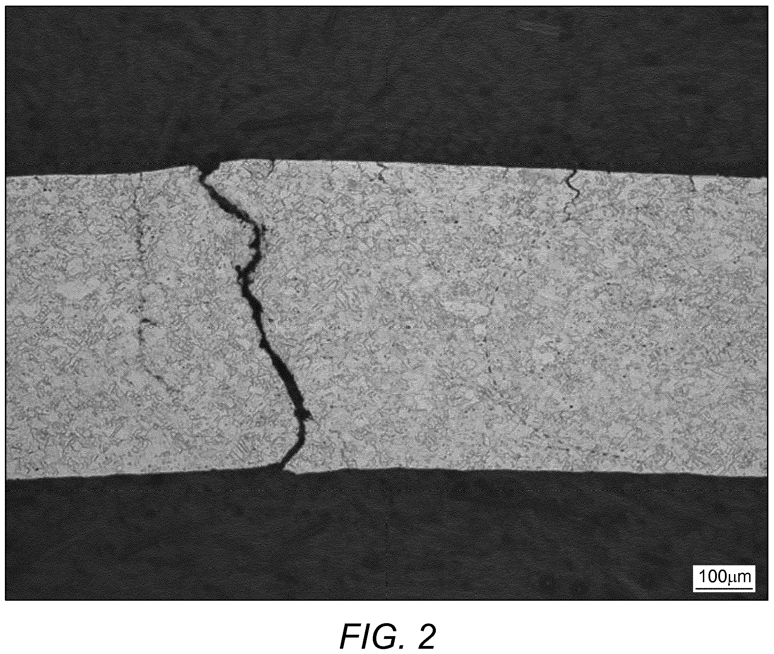

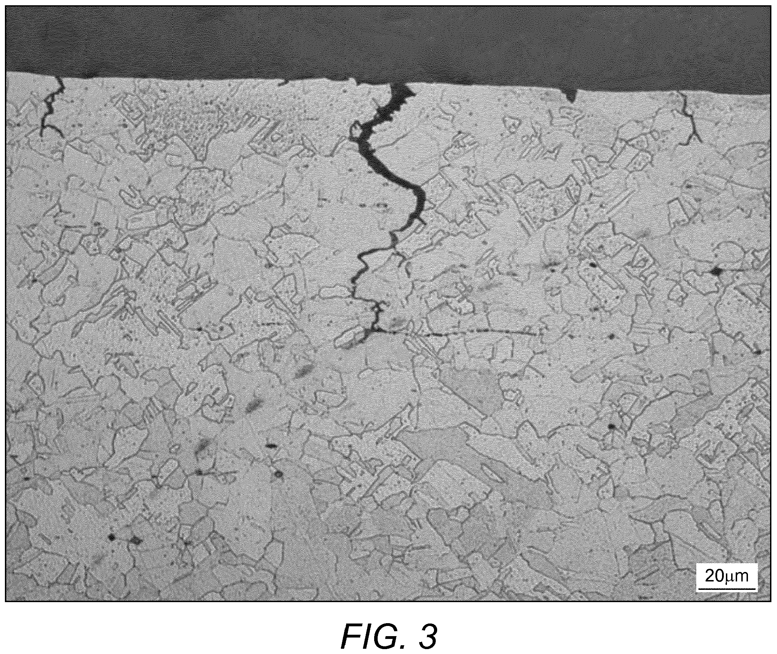

However, water blocking layers made of copper have been discovered to crack when subject to cyclic bending and stress. Any such crack through the water barrier constitutes failure of the ability of a cable to exclude water. Copper is, in particular, vulnerable to stress corrosion cracking (SCC), which is the cracking induced from the combined influence of tensile stress and a corrosive environment. Examples of SCC in copper are shown in figures 2 and 3.

Without wishing to be limited by theory, SCC is caused by the interaction between copper and a particular substance, including ammonia or an ammoniacal compound, nitrates and nitrites. Such ammonia-based compounds may originate from other components of the cable, such as the polymeric sheath, insulation, semi-conducting compounds, bonding agents or swelling tapes.

SCC requires the presence of stress. Indeed, SCC is typically not observed, or is minimal, in materials which are not subjected to bending stresses. SCC typically results in cracks that are oriented perpendicular to the tensile stresses applied to the material during bending. It is believed that elevated temperatures generated in the cable during use may promote the release of corrosive agents that in turn promote SCC. It should be noted that high temperatures and corrosive agents alone do not appear sufficient to induce SCC; the application of stress is also required.

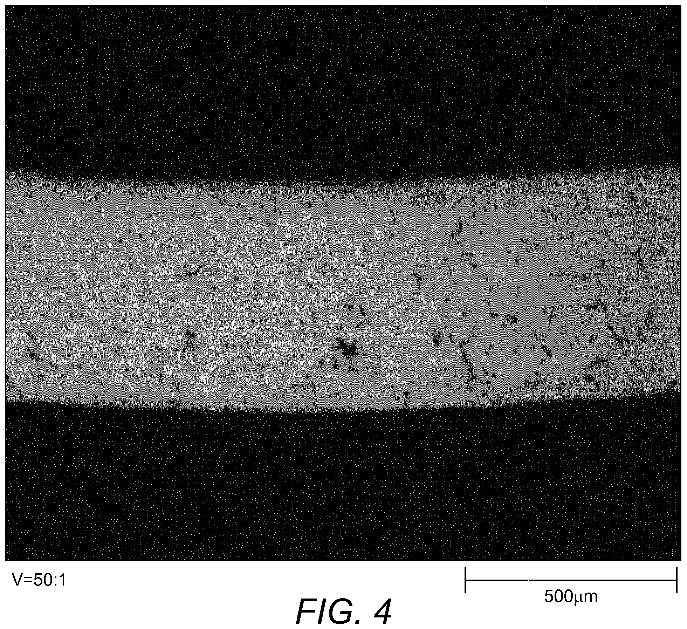

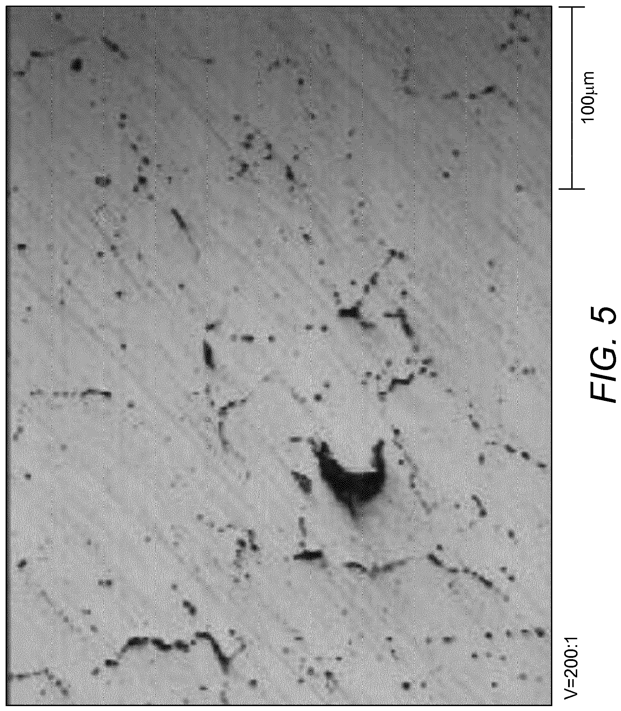

Copper has also been shown to be susceptible to a further failure mechanism mediated by the "Dissolved Oxide/Hydrogen Permeation Interaction", or the O/H mechanism, whereby inter-granular cracks appear in copper, running along the grain boundaries of copper in a branching configuration. The O/H mechanism gives a 'burst open' appearance to the cracks (see Figures 4 & 5).

It appears that the cracking observed in copper via this mechanism is not stress dependent, since it can take place in the absence of stress, and since the cracks produced appear randomly distributed, and not oriented along any direction of the application of stress forces.

However, copper water-blocking layers in cables that have been subject to bending stresses show little or few cracks outside the bending region of the cable. Instead, cracks are typically observed in the bending region, and are generally oriented perpendicular to the tensile stresses applied during bending. This suggests SCC is the predominant cause of failure of the copper water-blocking layers.

These facts and findings indicate that failure of the copper water-blocking layers were initiated by SCC caused by fatigue in a corrosive environment; the fatigue strength of the copper water barrier will have been reduced by the additional crack nucleation due to the SCC.

### Example 2

Test cables were fabricated and subjected to flex-fatigue qualification tests in order to compare conventional cables with cables of the present invention. Three core samples were manufactured, as follows.
- Core 1: conventionally made with a water-blocking layer made of Cu-ETP
- Core 2: made with a water-blocking barrier made of C70600. The water-blocking layer was bonded to the insulating layer.
- Core 3: made with a water-blocking barrier made of C70600. The water-blocking layer was not bonded to the insulating layer.

The copper used for the water-blocking layer in conventional cables is C11000 (UNS) [also known as C101 (British Standard) and CW004A (European Standard)].

All core samples featured 1mm thick, longitudinally seam-welded water-blocking layers. Following manufacture and electrical acceptance tests, sample lengths of each core type were subjected to flex-fatigue testing.

Results of the flex-fatigue testing show that a bonded water-blocking layer made of C70600 (core 2) outperformed the conventional water blocking design (core 1) by a factor of approximately two.

The failure of the copper-ETP water-blocking layer was almost certainly initiated by SCC failure caused by fatigue in a corrosive environment; its fatigue strength was probably reduced by the additional crack nucleation due to the SCC.

## Claims

1. A cable comprising one or more cores, each core comprising:
a conductor;
an insulating layer; and
a water-blocking layer,
wherein the conductor, the insulating layer and the water-blocking layer each extend along the longitudinal axis of the core,
wherein the insulating layer is axially external to the conductor, and the water-blocking layer is axially external to the insulating layer, and
wherein the water-blocking layer comprises a copper alloy,
wherein the alloy comprises:
- 6% to 20% (w/w) nickel, and 80% to 94% (w/w) copper;
- 7% to 15% (w/w) nickel, and 85% to 93% (w/w) copper;
- 8% to 12% (w/w) nickel, and 88% to 92% (w/w) copper;
- 9 to 11% (w/w) nickel, and 89% to 91% (w/w) copper;
- 8% to 12% (w/w) nickel, 0.5% to 2.5% (w/w) iron, 0.5% to 1.5% (w/w) manganese, and 84% to 91% (w/w) copper;
- 9% to 11% (w/w) nickel, 1% to 1.8% (w/w) iron, 0.8% to 1.2% (w/w) manganese, and 86% to 89.2% (w/w) copper;
- 20% to 40% (w/w) nickel, and 60% to 80% (w/w) copper;
- 25% to 35% (w/w) nickel, and 65% to 75% (w/w) copper;
- 25% to 35% (w/w) nickel, 0.1% to 2% (w/w) iron, 0.5% to 1.5% (w/w) manganese, and 61.5% to 74.4% (w/w) copper;
- 29% to 33% (w/w) nickel, 0.4% to 1% (w/w) iron, 0.8% to 1.2% (w/w) manganese, and 64.8% to 69.8% (w/w) copper;
25% to 35% (w/w) nickel, 1% to 3% (w/w) iron, 1% to 4% (w/w) manganese, and 58% to 73% (w/w) copper;
- 29% to 32% (w/w) nickel, 1.7% to 2.3% (w/w) iron, 1.5% to 2.5% (w/w) manganese, and 63.2% to 67.8% (w/w) copper;
- 0.5% to 4% (w/w) beryllium and 96% to 99.5% (w/w) copper;
- 1% to 3% (w/w) beryllium and 97% to 99% (w/w) copper;
- 1.5% to 2% (w/w) beryllium and 98% to 98.5% (w/w) copper;
or
- 20% to 25% (w/w) zinc, 1 to 5% aluminium, and 70% to 79% (w/w) copper.

2. A cable according to claim 1, wherein the water-blocking layer is corrugated.

3. A cable according to any preceding claim, wherein the core further comprises a layer of a sealing material disposed between the water-blocking layer and the insulating layer, wherein the sealing material is capable of swelling upon contact with water.

4. A cable according to any preceding claim, wherein the cable comprises two further cores, wherein the at least three cores are bundled together along their longitudinal axes to provide an assembly, wherein at least a part of an external surface of each core is in contact with at least a part of the external surface of each of the other two cores.

5. A cable according to claim 4, wherein the assembly further comprises a spacer extending along the longitudinal axis of the assembly.

6. A cable according to claim 4 or 5, further comprising a sheath axially external to the assembly, and spacer if present.

7. A cable according to claim 4, 5 or 6, comprising a first plurality of wires extending along the longitudinal axis of the assembly and placed circumferentially around the assembly or the sheath, if present.

8. A cable according to claim 7 comprising a second plurality of wires extending along the longitudinal axis of the assembly and placed circumferentially around the first plurality of the wires, wherein the wires of the first plurality of wires are helically wound in a first direction and the wires of the second plurality of wires are helically wound in a direction opposition to the first.

9. A use of an alloy in a water-blocking layer of a cable, wherein the alloy comprises:
- 6% to 20% (w/w) nickel, and 80% to 94% (w/w) copper;
- 7% to 15% (w/w) nickel, and 85% to 93% (w/w) copper;
- 8% to 12% (w/w) nickel, and 88% to 92% (w/w) copper;
- 9 to 11% (w/w) nickel, and 89% to 91% (w/w) copper;
- 8% to 12% (w/w) nickel, 0.5% to 2.5% (w/w) iron, 0.5% to 1.5% (w/w) manganese, and 84% to 91% (w/w) copper;
- 9% to 11% (w/w) nickel, 1% to 1.8% (w/w) iron, 0.8% to 1.2% (w/w) manganese, and 86% to 89.2% (w/w) copper;
- 20% to 40% (w/w) nickel, and 60% to 80% (w/w) copper;
- 25% to 35% (w/w) nickel, and 65% to 75% (w/w) copper;
- 25% to 35% (w/w) nickel, 0.1% to 2% (w/w) iron, 0.5% to 1.5% (w/w) manganese, and 61.5% to 74.4% (w/w) copper;
- 29% to 33% (w/w) nickel, 0.4% to 1% (w/w) iron, 0.8% to 1.2% (w/w) manganese, and 64.8% to 69.8% (w/w) copper;
- 25% to 35% (w/w) nickel, 1% to 3% (w/w) iron, 1% to 4% (w/w) manganese, and 58% to 73% (w/w) copper;
- 29% to 32% (w/w) nickel, 1.7% to 2.3% (w/w) iron, 1.5% to 2.5% (w/w) manganese, and 63.2% to 67.8% (w/w) copper;
- 0.5% to 4% (w/w) beryllium and 96% to 99.5% (w/w) copper;
- 1% to 3% (w/w) beryllium and 97% to 99% (w/w) copper;
- 1.5% to 2% (w/w) beryllium and 98% to 98.5% (w/w) copper; or
- 20% to 25% (w/w) zinc, 1 to 5% aluminium, and 70% to 79% (w/w) copper.

10. A method of manufacturing a cable, comprising:
providing a conductor extending along a longitudinal axis,
disposing an insulating layer around the conductor, and
disposing a water-blocking layer around the insulating layer to form a core,
wherein the insulating layer and water-blocking layer extend along a longitudinal axis of the core,
wherein the water-blocking layer comprises a copper alloy, and
forming the cable from the core,
wherein the copper alloy comprises copper and nickel; copper and beryllium; or copper, zinc and aluminium according to any one of claims 1 to 8.

11. A method according to claim 10, wherein the water-blocking layer is formed by wrapping a sheet of copper alloy radially around the insulating layer, and wherein an edge of the wrapped copper alloy sheet is bonded with an adjacent edge of the sheet with adhesive, or welded with an adjacent edge of the sheet.

12. A method according to claim 10 or 11, wherein the water-blocking layer and the insulating layer are fastened together to prevent movement between the two layers, or wherein the water-blocking layer and the insulating layer are not fastened together to allow movement between the two layers.

13. A method of transmitting electricity, comprising connecting a first installation or device with a second installation or device with a cable according to claim any one of claims 1 to 8, and transmitting electricity from the first installation or device to the second installation or device through the cable.

## Patentansprüche

1. Kabel, das eine oder mehrere Adern umfasst, jede Ader umfassend:
einen Leiter;
eine Isolierschicht; und
eine wasserabweisende Schicht,
wobei sich der Leiter, die Isolierschicht und die wasserabweisende Schicht jeweils entlang der Längsachse der Ader erstrecken,
wobei sich die Isolierschicht axial außerhalb des Leiters befindet und sich die wasserabweisende Schicht axial außerhalb der Isolierschicht befindet; und
wobei die wasserabweisende Schicht eine Kupferlegierung umfasst, wobei die Legierung umfasst:
- 6 % bis 20 % (w/w) Nickel und 80 % bis 94 % (w/w) Kupfer;
- 7 % bis 15 % (w/w) Nickel und 85 % bis 93 % (w/w) Kupfer;
- 8 % bis 12 % (w/w) Nickel und 88 % bis 92 % (w/w) Kupfer;
- 9 % bis 11 % (w/w) Nickel und 89 % bis 91 % (w/w) Kupfer;
- 8 % bis 12 % (w/w) Nickel, 0,5 % bis 2,5 % (w/w) Eisen, 0,5 % bis 1,5 % (w/w) Mangan und 84 % bis 91 % (w/w) Kupfer;
- 9 % bis 11 % (w/w) Nickel, 1 % bis 1,8 % (w/w) Eisen, 0,8 % bis 1,2 % (w/w) Mangan und 86 % bis 89,2 % (w/w) Kupfer;
- 20 % bis 40 % (w/w) Nickel und 60 % bis 80 % (w/w) Kupfer;
- 25 % bis 35 % (w/w) Nickel und 65 % bis 75 % (w/w) Kupfer;
- 25 % bis 35 % (w/w) Nickel, 0,1 % bis 2 % (w/w) Eisen, 0,5 % bis 1,5 % (w/w)
Mangan und 61,5 % bis 74,4 % (w/w) Kupfer;
- 29 % bis 33 % (w/w) Nickel, 0,4 % bis 1 % (w/w) Eisen, 0,8 % bis 1,2 % (w/w)
Mangan und 64,8 % bis 69,8 % (w/w) Kupfer;
25 % bis 35 % (w/w) Nickel, 1 % bis 3 % (w/w) Eisen, 1 % bis 4 % (w/w) Mangan und 58 % bis 73 % (w/w) Kupfer;
- 29 % bis 32 % (w/w) Nickel, 1,7 % bis 2,3 % (w/w) Eisen, 1,5 % bis 2,5 % (w/w) Mangan und 63,2 % bis 67,8 % (w/w) Kupfer;
- 0,5 % bis 4 % (w/w) Beryllium und 96 % bis 99,5 % (w/w) Kupfer;
- 1 % bis 3 % (w/w) Beryllium und 97 % bis 99 % (w/w) Kupfer;
- 1,5 % bis 2 % (w/w) Beryllium und 98 % bis 98,5 % (w/w) Kupfer; oder
- 20 % bis 25 % (w/w) Zink, 1 bis 5 % Aluminium und 70 % bis 79 % (w/w) Kupfer.

2. Kabel nach Anspruch 1, wobei die wasserabweisende Schicht gewellt ist.

3. Kabel nach einem der vorhergehenden Ansprüche, wobei die Ader ferner eine Schicht aus einem Dichtungsmaterial umfasst, die zwischen der wasserabweisenden Schicht und der Isolierschicht angeordnet ist, wobei das Dichtungsmaterial bei Kontakt mit Wasser aufquellen kann.

4. Kabel nach einem der vorhergehenden Ansprüche, wobei das Kabel zwei weitere Adern umfasst, wobei die mindestens drei Adern entlang ihrer Längsachsen gebündelt sind, um eine Anordnung bereitzustellen, wobei mindestens ein Teil einer Außenfläche von jeder Ader in Kontakt mit mindestens einem Teil der Außenfläche von jeder der zwei anderen Adern ist.

5. Kabel nach Anspruch 4, wobei die Anordnung ferner einen Abstandshalter umfasst, der sich entlang der Längsachse der Anordnung erstreckt.

6. Kabel nach Anspruch 4 oder 5, ferner umfassend einen Mantel, der sich axial außerhalb der Anordnung und des Abstandshalters, falls vorhanden, befindet.

7. Kabel nach Anspruch 4, 5 oder 6, umfassend eine erste Vielzahl von Drähten, die sich entlang der Längsachse der Anordnung erstrecken und in Umfangsrichtung um die Anordnung oder den Mantel, falls vorhanden, herum platziert sind.

8. Kabel nach Anspruch 7, umfassend eine zweite Vielzahl von Drähten, die sich entlang der Längsachse der Anordnung erstrecken und in Umfangsrichtung um die erste Vielzahl von Drähten herum platziert sind, wobei die Drähte der ersten Vielzahl von Drähten spiralförmig in einer ersten Richtung gewickelt sind und die Drähte der zweiten Vielzahl von Drähten spiralförmig in einer der ersten entgegengesetzten Richtung gewickelt sind.

9. Verwendung einer Legierung in einer wasserabweisenden Schicht eines Kabels, wobei die Legierung umfasst:
- 6 % bis 20 % (w/w) Nickel und 80 % bis 94 % (w/w) Kupfer;
- 7 % bis 15 % (w/w) Nickel und 85 % bis 93 % (w/w) Kupfer;
- 8 % bis 12 % (w/w) Nickel und 88 % bis 92 % (w/w) Kupfer;
- 9 % bis 11 % (w/w) Nickel und 89 % bis 91 % (w/w) Kupfer;
- 8 % bis 12 % (w/w) Nickel, 0,5 % bis 2,5 % (w/w) Eisen, 0,5 % bis 1,5 % (w/w) Mangan und 84 % bis 91 % (w/w) Kupfer;
- 9 % bis 11 % (w/w) Nickel, 1 % bis 1,8 % (w/w) Eisen, 0,8 % bis 1,2 % (w/w) Mangan und 86 % bis 89,2 % (w/w) Kupfer;
- 20 % bis 40 % (w/w) Nickel und 60 % bis 80 % (w/w) Kupfer;
- 25 % bis 35 % (w/w) Nickel und 65 % bis 75 % (w/w) Kupfer;
- 25 % bis 35 % (w/w) Nickel, 0,1 % bis 2 % (w/w) Eisen, 0,5 % bis 1,5 % (w/w) Mangan und 61,5 % bis 74,4 % (w/w) Kupfer;
- 29 % bis 33 % (w/w) Nickel, 0,4 % bis 1 % (w/w) Eisen, 0,8 % bis 1,2 % (w/w) Mangan und 64,8 % bis 69,8 % (w/w) Kupfer;
- 25 % bis 35 % (w/w) Nickel, 1 % bis 3 % (w/w) Eisen, 1 % bis 4 % (w/w) Mangan und 58 % bis 73 % (w/w) Kupfer;
- 29 % bis 32 % (w/w) Nickel, 1,7 % bis 2,3 % (w/w) Eisen, 1,5 % bis 2,5 % (w/w) Mangan und 63,2 % bis 67,8 % (w/w) Kupfer;
- 0,5 % bis 4 % (w/w) Beryllium und 96 % bis 99,5 % (w/w) Kupfer;
- 1 % bis 3 % (w/w) Beryllium und 97 % bis 99 % (w/w) Kupfer;
- 1,5 % bis 2 % (w/w) Beryllium und 98 % bis 98,5 % (w/w) Kupfer; oder
- 20 % bis 25 % (w/w) Zink, 1 bis 5 % Aluminium und 70 % bis 79 % (w/w) Kupfer.

10. Verfahren zur Herstellung eines Kabels, umfassend:
Bereitstellen eines Leiters, der sich entlang einer Längsachse erstreckt,
Anordnen einer Isolierschicht um den Leiter, und
Anordnen einer wasserabweisenden Schicht um die Isolierschicht, um eine Ader zu bilden,
wobei sich die Isolierschicht und die wasserabweisende Schicht entlang der Längsachse der Ader erstrecken,
wobei die wasserabweisende Schicht eine Kupferlegierung umfasst, und Bilden des Kabels aus der Ader,
wobei die Kupferlegierung Kupfer und Nickel; Kupfer und Beryllium; oder Kupfer, Zink und Aluminium nach einem der Ansprüche 1 bis 8 umfasst.

11. Verfahren nach Anspruch 10, wobei die wasserabweisende Schicht durch Wickeln eines Kupferlegierungsblechs radial um die Isolierschicht gebildet wird, und wobei eine Kante des gewickelten Kupferlegierungsblechs mit einer angrenzenden Kante des Blechs mittels Klebstoff verbunden wird oder mit einer angrenzenden Kante des Blechs verschweißt wird.

12. Verfahren nach Anspruch 10 oder 11, wobei die wasserabweisende Schicht und die Isolierschicht miteinander verbunden werden, um eine Bewegung zwischen den zwei Schichten zu verhindern, oder wobei die wasserabweisende Schicht und die Isolierschicht nicht miteinander verbunden sind, um eine Bewegung zwischen den beiden Schichten zuzulassen.

13. Verfahren zur Stromübertragung, umfassend Verbinden einer ersten Installation oder Vorrichtung mit einer zweiten Installation oder Vorrichtung mithilfe eines Kabels nach einem der Ansprüche 1 bis 8 und Übertragen von Strom von der ersten Installation oder Vorrichtung zu der zweiten Installation oder Vorrichtung über das Kabel.

## Revendications

1. Câble comprenant un ou plusieurs noyaux,
chaque noyau comprenant :
un conducteur ;
une couche isolante ; et
une couche étanche à l'eau,
dans lequel le conducteur, la couche isolante et la couche étanche à l'eau s'étendent chacune le long de l'axe longitudinal du noyau,
dans lequel la couche isolante est axialement extérieure au conducteur et la couche étanche à l'eau est axialement extérieure à la couche isolante, et
dans lequel la couche étanche à l'eau comprend un alliage de cuivre, dans lequel l'alliage comprend :
- 6 % à 20 % (p/p) de nickel, et 80 % à 94 % (p/p) de cuivre ;
- 7 % à 15 % (p/p) de nickel, et 85 % à 93 % (p/p) de cuivre ;
- 8 % à 12 % (p/p) de nickel, et 88 % à 92 % (p/p) de cuivre ;
- 9 à 11 % (p/p) de nickel, et 89 % à 91 % (p/p) de cuivre ;
- 8 % à 12 % (p/p) de nickel, 0,5 % à 2,5 % (p/p) de fer, 0,5 % à 1,5 % (p/p) de manganèse, et 84 % à 91 % (p/p) de cuivre ;
- 9 % à 11 % (p/p) de nickel, 1 % à 1,8 % (p/p) de fer, 0,8 % à 1,2 % (p/p) de manganèse, et 86 % à 89,2 % (p/p) de cuivre ;
- 20 % à 40 % (p/p) de nickel, et 60 % à 80 % (p/p) de cuivre ;
- 25 % à 35 % (p/p) de nickel, et 65 % à 75 % (p/p) de cuivre ;
- 25 % à 35 % (p/p) de nickel, 0,1 % à 2 % (p/p) de fer, 0,5 % à 1,5 % (p/p) de
manganèse, et 61,5 % à 74,4 % (p/p) de cuivre ;
- 29 % à 33 % (p/p) de nickel, 0,4 % à 1 % (p/p) de fer, 0,8 % à 1,2 % (p/p) de
manganèse, et 64,8 % à 69,8 % (p/p) de cuivre ;
25 % à 35 % (p/p) de nickel, 1 % à 3 % (p/p) de fer, 1 % à 4 % (p/p) de manganèse, et 58 % à 73 % (p/p) de cuivre ;
- 29 % à 32 % (p/p) de nickel, 1,7 % à 2,3 % (p/p) de fer, 1,5 % à 2,5 % (p/p) de manganèse, et 63,2 % à 67,8 % (p/p) de cuivre ;
- 0,5 % à 4 % (p/p) de béryllium et 96 % à 99,5 % (p/p) de cuivre ;
- 1 % à 3 % (p/p) de béryllium et 97 % à 99 % (p/p) de cuivre ;
- 1,5 % à 2 % (p/p) de béryllium et 98 % à 98,5 % (p/p) de cuivre ; ou
- 20 % à 25 % (p/p) de zinc, 1 à 5 % d'aluminium, et 70 % à 79 % (p/p) de cuivre.

2. Câble selon la revendication 1, dans lequel la couche étanche à l'eau est ondulée.

3. Câble selon l'une quelconque revendication précédente, dans lequel le noyau comprend en outre une couche d'un matériau d'étanchéité disposé entre la couche étanche à l'eau et la couche isolante, dans lequel le matériau d'étanchéité est capable de se gonfler au contact de l'eau.

4. Câble selon l'une quelconque revendication précédente, dans lequel le câble comprend deux noyaux supplémentaires, dans lequel l'au moins trois noyaux sont regroupés le long de leurs axes longitudinaux pour fournir un assemblage, dans lequel au moins une partie d'une surface externe de chaque noyau est en contact avec au moins une partie de la surface externe de chacun des deux autres noyaux.

5. Câble selon la revendication 4, dans lequel l'assemblage comprend en outre un espaceur s'étendant le long de l'axe longitudinal de l'assemblage.

6. Câble selon la revendication 4 ou 5, comprenant en outre une gaine axialement extérieure à l'assemblage et à l'espaceur si présent.

7. Câble selon la revendication 4, 5 ou 6, comprenant une première pluralité de fils s'étendant le long de l'axe longitudinal de l'assemblage et placés de manière circonférentielle autour de l'assemblage ou de la gaine, si présent.

8. Câble selon la revendication 7, comprenant une deuxième pluralité de fils s'étendant le long de l'axe longitudinal de l'assemblage et placés de manière circonférentielle autour de la première pluralité des fils, dans lequel les fils de la première pluralité de fils sont enroulés de façon hélicoïdale dans une première direction et les fils de la deuxième pluralité de fils sont enroulés de façon hélicoïdale dans une direction opposée à la première direction.

9. Utilisation d'un alliage dans une couche étanche à l'eau d'un câble, dans lequel l'alliage comprend :
- 6 % à 20 % (p/p) de nickel, et 80 % à 94 % (p/p) de cuivre ;
- 7 % à 15 % (p/p) de nickel, et 85 % à 93 % (p/p) de cuivre ;
- 8 % à 12 % (p/p) de nickel, et 88 % à 92 % (p/p) de cuivre ;
- 9 à 11 % (p/p) de nickel, et 89 % à 91 % (p/p) de cuivre ;
- 8 % à 12 % (p/p) de nickel, 0,5 % à 2,5 % (p/p) de fer, 0,5 % à 1,5 % (p/p) de manganèse, et 84 % à 91 % (p/p) de cuivre ;
- 9 % à 11 % (p/p) de nickel, 1 % à 1,8 % (p/p) de fer, 0,8 % à 1,2 % (p/p) de manganèse, et 86 % à 89,2 % (p/p) de cuivre ;
- 20 % à 40 % (p/p) de nickel, et 60 % à 80 % (p/p) de cuivre ;
- 25 % à 35 % (p/p) de nickel, et 65 % à 75 % (p/p) de cuivre ;
- 25 % à 35 % (p/p) de nickel, 0,1 % à 2 % (p/p) de fer, 0,5 % à 1,5 % (p/p) de manganèse, et 61,5 % à 74,4 % (p/p) de cuivre ;
- 29 % à 33 % (p/p) de nickel, 0,4 % à 1 % (p/p) de fer, 0,8 % à 1,2 % (p/p) de manganèse, et 64,8 % à 69,8 % (p/p) de cuivre ;
- 25 % à 35 % (p/p) de nickel, 1 % à 3 % (p/p) de fer, 1 % à 4 % (p/p) de manganèse, et 58 % à 73 % (p/p) de cuivre ;
- 29 % à 32 % (p/p) de nickel, 1,7 % à 2,3 % (p/p) de fer, 1,5 % à 2,5 % (p/p) de manganèse, et 63,2 % à 67,8 % (p/p) de cuivre ;
- 0,5 % à 4 % (p/p) de béryllium et 96 % à 99,5 % (p/p) de cuivre ;
- 1 % à 3 % (p/p) de béryllium et 97 % à 99 % (p/p) de cuivre ;
- 1,5 % à 2 % (p/p) de béryllium et 98 % à 98,5 % (p/p) de cuivre ; ou
- 20 % à 25 % (p/p) de zinc, 1 à 5 % d'aluminium et 70 % à 79 % (p/p) de cuivre.

10. Procédé pour la fabrication d'un câble, comprenant :
la fourniture d'un conducteur s'étendant le long d'un axe longitudinal,
disposant une couche isolante autour du conducteur, et
la disposition d'une couche étanche à l'eau autour de la couche isolante pour former un noyau,
dans lequel la couche isolante et la couche étanche à l'eau s'étendent le long d'un axe longitudinal du noyau,
dans lequel la couche étanche à l'eau comprend un alliage de cuivre et la formation du câble à partir du noyau,
dans lequel l'alliage de cuivre comprend du cuivre et du nickel ; du cuivre et du béryllium ; ou du cuivre, du zinc et de l'aluminium selon l'une quelconque des revendications 1 à 8.

11. Procédé selon la revendication 10, dans lequel la couche étanche à l'eau est formée en enroulant une feuille d'alliage de cuivre de manière radiale autour de la couche isolante, et dans lequel un bord de la feuille enroulée d'alliage de cuivre est lié à un bord adjacent de la feuille avec de l'adhésif ou soudé à un bord adjacent de la feuille.

12. Procédé selon la revendication 10 ou 11, dans lequel la couche étanche à l'eau et la couche isolante sont fixées ensemble pour empêcher tout mouvement entre les deux couches, ou dans lequel la couche étanche à l'eau et la couche isolante ne sont pas fixées ensemble pour permettre le mouvement entre les deux couches.

13. Procédé pour la transmission d'électricité, comprenant la connexion d'une première installation ou d'un premier dispositif avec une deuxième installation ou un deuxième dispositif avec un câble selon l'une quelconque des revendications 1 à 8, et la transmission d'électricité à partir de la première installation ou du premier dispositif à la deuxième installation ou au deuxième dispositif à travers le câble.
